# EUROPEAN PATENT APPLICATION

(11) **EP 4 316 319 A1**
(43) Date of publication of application: **07.02.2024**
(21) Application number: 23187355.5
(22) Date of filing: 24.07.2023
(51) Int. Cl.: A47J 37/06, A47J 37/12, A47J 45/07

(54) **FRYING BASKET WITH DETACHABLE HANDLE AND AIR FRYER**

(30) Priority: 03.08.2022 CN 202222029134 U
(71) Applicant: Ningbo Careline Electric Appliance Co., Ltd., Ningbo, Zhejiang 315000 (CN)
(72) Inventor: ZHANG, Yichi, NINGBO, 315000 (CN); BAI, Rongjie, NINGBO, 315000 (CN); HUANG, Chengzhou, NINGBO, 315000 (CN)
(74) Representative: Locas, Davide

(57) **Abstract**

The present disclosure provides a frying basket with a detachable handle and an air fryer, including a frying basket body (1) and a handle section (2), wherein the frying basket body (1) and the handle section (2) are detachably connected to each other; the inner part of the frying basket body (1) is provided with a space to accommodate the handle section (2); the frying basket body (1) is thereon provided with a mounting port (9); one end of the handle section (2) is provided with a mounting base (21); and the mounting base (21) is fitted and embedded in the mounting port (9). The present disclosure can solve the existing problems that the frying basket and handle cannot be disassembled and are inconvenient in transportation.

## Description

### Technical Field

The present disclosure relates to the field of cooking appliances, in particular to a frying basket with a detachable handle and an air fryer.

### Background Art

Air fryer, a cooking appliance, is currently very popular and frequently in use. In the existing technology, the handle on the frying basket is generally locked and fixed on the frying basket, or the handle and frying basket are directly integrally molded, which affects the packaging efficiency of the overall air fryer by the protruding handle during the transporting process of the product, but also requires a larger package box and more packaging materials, thereby weakening the practicality.

### Summary

The present disclosure provides a frying basket with a detachable handle and an air fryer, which can solve the existing problems that the frying basket and handle cannot be disassembled and are inconvenient in transportation.

To achieve the objective above, in the first aspect, the present disclosure provides technical solutions as follows. A frying basket with a detachable handle comprises a frying basket body and a handle section, wherein the frying basket body and the handle section are detachably connected to each other; the inner part of the frying basket body is provided with a space to accommodate the handle section; the frying basket body is thereon provided with a mounting port; one end of the handle section is provided with a mounting base; and the mounting base is fitted and embedded in the mounting port. By arranging the mounting base and the mounting port, it is possible to realize the detachable connection between the frying basket body and the handle section. The handle section can be placed inside the frying basket body after disassembly, which not only reduces the volume of the outer package during transportation, but also protects the handle section from the collision.

Preferably, the mounting base is provided with a snapping structure, which is configured to lock with the frying basket body in a snapping manner when the mounting base is fitted and embedded in the mounting port. The snapping structure can achieve a fixed connection between the frying basket body and the handle section so that the frying basket body and the handle section will not be separated from each other during use.

Preferably, the snapping structure comprises a hook; one end of the hook is hinged to the mounting base and the other end is a movable end, wherein a resilient member is arranged between the movable end and the mounting base; the mounting port is therein provided with a snapping port; and the movable end of the hook extends and is locked with the snapping port in a snapping manner by the resilient member. By arranging a movable hook, the frying basket body and the handle section can be unlocked even after they are snapped to each other, so that the frying basket body and the handle section can be assembled and disassembled repeatedly.

Preferably, the mounting port is provided therein with a snap plate inclined toward the hook, and the snapping port is formed between an inclined protruding end of the snap plate and the frying basket body. The snap plate can press the hook to make it move, so that the mounting base is able to be automatically snapped with the snapping port when inserted into the mounting port, which is very convenient.

Preferably, the mounting base is provided with a through-hole, and a space between the through-hole and the movable end of the hook is provided for an auxiliary tool to be inserted and moved. Auxiliary tools are able to toggle the movable end of the hook when reaching into the mounting base, thereby disengaging the hook from the snapping port and enabling the disassembly of the frying basket body and the handle section.

Preferably, the through-hole is sealed by a detachable plug, thus preventing oil and dirty from getting inside the inner part of the mounting base.

Preferably, the mounting port is provided on one of side edges of the frying basket body, and the mounting base of the handle section is slid into the mounting port from the top to the bottom or from the bottom to the top, and thus it is easier to assemble the frying basket body and the handle section by this arrangement.

Preferably, sidewalls of both sides of the mounting port are each provided with a limit groove, and both sides of the mounting base are each provided with a limit protrusion corresponding to the limit groove;
or, the sidewalls of both sides of the mounting port are each provided with the limit protrusion, and both sides of the mounting base are each provided with the limit groove corresponding to the limit protrusion; and when the mounting base is slid into the mounting port, the limit protrusion snaps into the limit groove. The limit protrusion and the limit groove can guide the mounting base when it is inserted into the mounting port, and can also limit the handle section in a horizontal direction to prevent the handle section from sliding out of the mounting port along the horizontal direction.

Preferably, the frying basket body comprises a pot body and a panel arranged on one side of the pot body; the mounting port is arranged on the panel, and the inner part of the pot body is a space to accommodate the handle section. The handle section is arranged and connected through the panel, thereby making the arrangement of the mounting port more flexible; and the internal space of the pot body is able to prevent the handle section from disengaging during transportation, which is convenient.

In the second aspect, the present disclosure further provides an air fryer comprising a machine body and a frying basket as described in the first aspect, wherein the machine body is provided with a cooking cavity, and the frying basket is taken out and placed into the cooking cavity from a side wall of the machine body. For such drawer-type air fryer, it is especially important to disassemble the handle section for separate storage when transporting.

Compared with the prior art, the beneficial effects of the present disclosure are described below.

By making the frying basket and the handle into a split structure that is a detachable assembling structure, on the one hand, the handle can be placed directly in the fryer basket during transportation, which does not occupy the space of packaging boxes, and no packaging materials need to be specially designed; on the other hand, it is convenient to assembly, maintenance, and cleaning.

A hook is provided inside the handle, wherein one end of the hook is hinged to the handle and the other end is the movable end. The hook can be hooked with the snapping port, thereby enabling the handle to be fixed on the frying basket, which achieves a convenient and reliable operation.

### Brief Description of Drawings

FIG. 1 is a main sectional structure view of a frying basket of the present disclosure;
FIG. 2 is an enlarged structural view of FIG. 1 at A;
FIG. 3 is a structural view of a disassembled state of a handle section of the present disclosure;
FIG. 4 is a sectional structural view of the handle section of the present disclosure;
FIG. 5 is a schematic view of an installation process of the handle section of the present disclosure;
FIG. 6 is a schematic view of a disassembly process of the handle section of the present disclosure;
FIG. 7 is an enlarged structural view of FIG. 6 at B; and
FIG. 8 is a schematic view of the packaging of the air fryer of the present disclosure.

### Reference numerals:

1-frying basket body, 11-pot body, 12-panel, 2-handle section, 21-mounting base, 23-limit protrusion, 24-through-hole, 3-plug, 4-resilient member, 5-rotating axis, 6-hook, 7-snap plate, 8-snapping port, 9-mounting port,10-auxiliary tool.

### Detailed Description of Embodiments

The technical solutions in the embodiments of the present disclosure will be clearly and completely described below with reference to the drawings in the embodiments of the present disclosure.

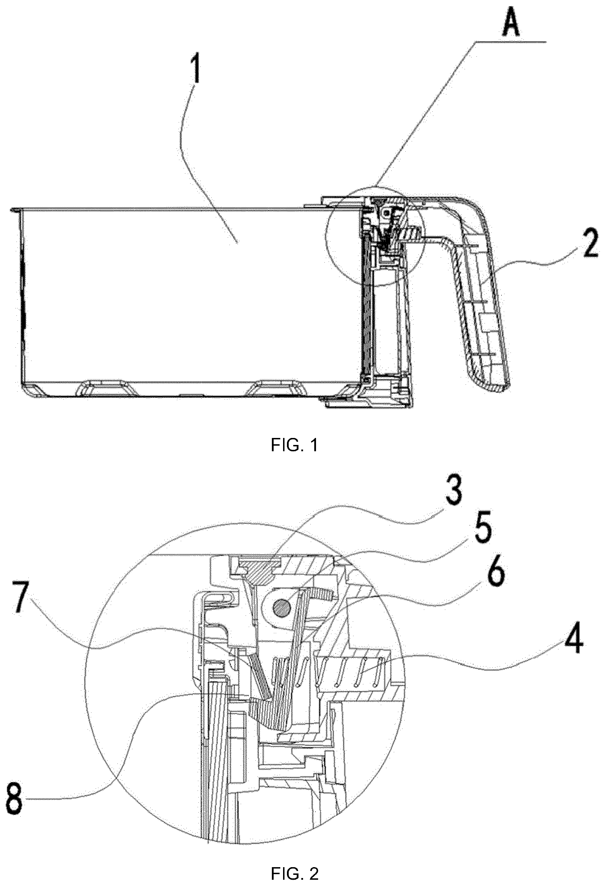

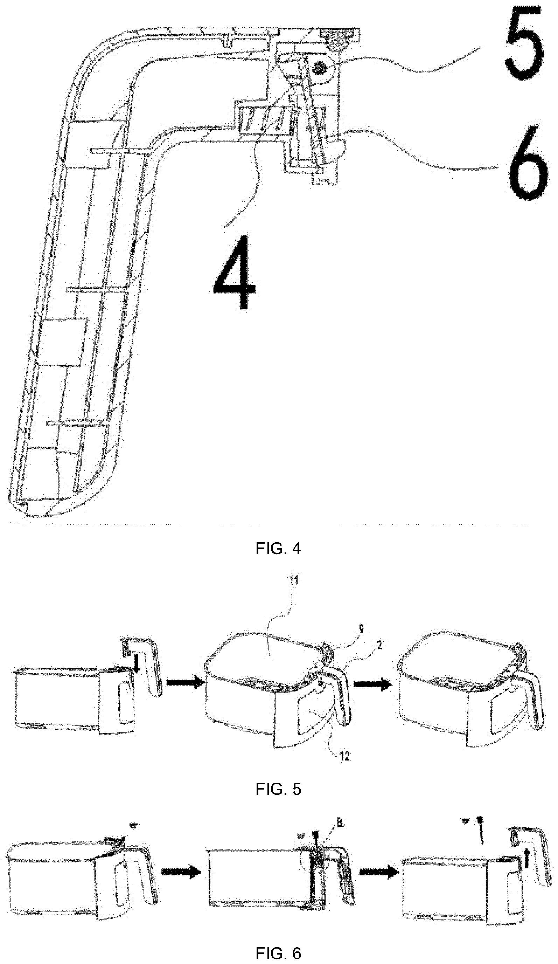

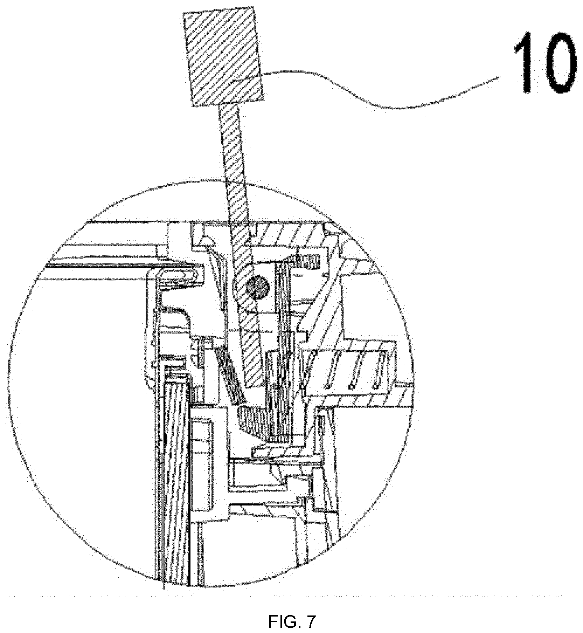

As shown in FIGS. 1-8, the present disclosure provides the following technical solutions to solve the problem that the existing frying basket and handle cannot be disassembled and are transported inconveniently. A frying basket with a detachable handle comprises a frying basket body 1 and a handle section 2, the frying basket body 1 and the handle section 2 are detachably connected to each other; the inner part of the frying basket body 1 is provided with a space to accommodate the handle section 2; the frying basket body 1 is thereon provided with a mounting port 9; one end of the handle section 2 is provided with a mounting base 21; and the mounting base 21 is fitted and embedded in the mounting port 9. By arranging the mounting base 21 and the mounting port 9, it is possible to realize the detachable connection between the frying basket body 1 and the handle section 2. The handle section 2 can be placed inside the frying basket body 1 after disassembly, which not only reduces the volume of the outer package during transportation, but also protects the handle section 2 from the collision.

Specifically, the mounting base 21 is a part of the handle section 2, actually, a part of the end portion of the handle section 2, and its shape corresponds to the mounting port 9, wherein the shape is not limited, as long as the mounting base 21 is able to be inserted into the mounting port 9 to enable the connection of the frying basket body 1 and the handle section 2. There are many ways to connect, either by fasteners, or by using a movable snapping structure for quick snapping and fixation, as long as the frying basket body 1 and the handle section 2 can be disassembled during transportation. The length of the handle section 2 should not be too long, if it is too long, it cannot be put into the space inside the frying basket body 1.

In the embodiment, the mounting base 21 is provided with a snapping structure for locking with the frying basket body 1 in a snapping manner when the mounting base 21 is fitted and embedded in the mounting port 9. The snapping structure is capable of enabling the fixed connection of the frying basket body 1 and the handle section 2, so that the frying basket body 1 and the handle section 2 will not separate by themselves when in use. The structure of the snapping structure can be movable or fixed, and the external force can enable an interference fit between the snap and the corresponding snapping position inside the mounting port 9, so that the frying basket body 1 and the handle section 2 can be firmly connected and fitted.

As one embodiment of the above snapping structure, as shown in FIGS. 2-4, the snapping structure comprises a hook 6; one end of the hook 6 is hinged to the mounting base 21 and the other end is a movable end, wherein a resilient member 4 is arranged between the movable end and the mounting base 21; the mounting port 9 is therein provided with a snapping port 8; and the movable end of the hook 6 extends and is locked with the snapping port 8 in a snapping manner by the resilient member 4. By arranging a movable hook 6, the frying basket body 1 and the handle section 2 can be unlocked even after they are snapped to each other, so that the frying basket body 1 and the handle section 2 can be assembled and disassembled repeatedly. The movable end of the hook 6 is in the shape of a hook, which, when hooked to the snapping port 8, does not rotate without external force, so that the mounting base 21 cannot be disengaged from the mounting port 9. One end of the hook 6 is hinged to the mounting base 21 by a rotating axis 5, wherein one end of the rotating axis 5 is provided with a limit table to axially limit one end of the rotating axis 5 and prevent the rotating axis 5 from being dislodged.

In the further addition, the mounting port 9 is provided therein with a snap plate 7 inclined toward the hook 6, and the snapping port 8 is formed between an inclined protruding end of the snap plate 7 and the frying basket body 1. The snap plate 7 can be squeezed on the hook 6 to make it move, so that the mounting base 21 is able to automatically be snapped with the snapping port 8 when inserted into the mounting port 9, which is very convenient. The snap plate 7 is part of the mounting port 9, which is integrally molded. This inverted structure facilitates the movable end of the hook 6 to hook the lower edge of the snap plate 7.

In order to disassemble the frying basket body 1 and the handle section 2 after assembly, the mounting base 21 is provided with a through-hole 24, and a space between the through-hole 24 and the movable end of the hook 6 is provided for an auxiliary tool 10 to be inserted and moved. The auxiliary tools 10 are able to toggle the movable end of the hook 6 when reaching into the mounting base 21, thereby disengaging the hook 6 from the snapping port 8 and enabling the disassembly of the frying basket body 1 and the handle section 2. Auxiliary tools 10 can be existing various tools that can be found in home. For example, screwdrivers, chopsticks, iron wire, and so on can be used as auxiliary tool 10. The auxiliary tool can also be a special tool that is used with the air fryer. This special tool is in the shape of a long rod, which can be inserted into the inner part of the mounting base 21 through the through-hole 24. During the whole insertion process, it is necessary to ensure that there is no hindrance, so that the hook 6 swings and disengages from the snapping port 8, thereby disassembling the frying basket body 1 and the handle section 2. The through-hole 24, when not in use, is sealed by a detachable plug 3, thus preventing oil and dirty from getting inside the inner part of the mounting base 21.

In the embodiment, the mounting port 9 is provided on one of side edges of the frying basket body 1, and the mounting base 21 of the handle section 2 is slid into the mounting port 9 from the top to the bottom or from the bottom to the top, and thus it is easier to assemble the frying basket body 1 and the handle section 2 by this arrangement. The mounting port 9 can be arranged in the middle of the upper side of the frying basket body 1 or at the lower side of the frying basket body 1, as desired.

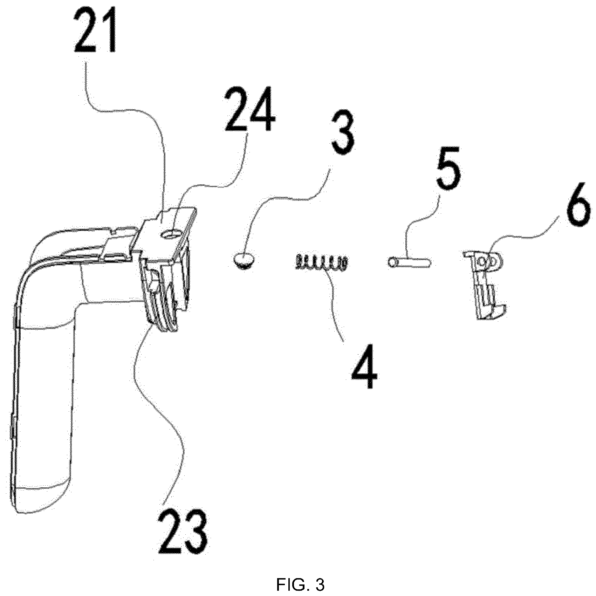

In the embodiment, as shown in FIG. 3, sidewalls of both sides of mounting port 9 are each provided with a limit groove, and both sides of the mounting base 21 are each provided with a limit protrusion 23 corresponding to the limit groove;
or, the sidewalls of both sides of mounting port 9 are each provided with the limit protrusion 23, and both sides of the mounting base 21 are each provided with the limit groove corresponding to the limit protrusion 23; and when the mounting base 21 is slid into the mounting port 9, the limit protrusion 23 is snapped into the limit groove. The limit protrusion 23 and the limit groove can guide the mounting base 21 when it is inserted into the mounting port 9, and can also limit the handle section 2 in the horizontal direction to prevent the handle section 2 from sliding out of the mounting port along the horizontal direction.

In the embodiment, as shown in FIG. 1, the frying basket body 1 comprises a pot body 11 and a panel 12 arranged on one side of the pot body 11; the mounting port 9 is arranged on the panel 12, and the inner part of the pot body 11 is a space to accommodate the handle section 2. The handle section 2 is arranged and connected through the panel 12, thereby making the arrangement of the mounting port 9 more flexible; and the internal space of the pot body 11 is able to prevent the handle section 2 from disengaging during transportation, which is convenient. The panel 12 can be flush with the outer side wall of the air fryer to maintain the aesthetic appearance of the air fryer.

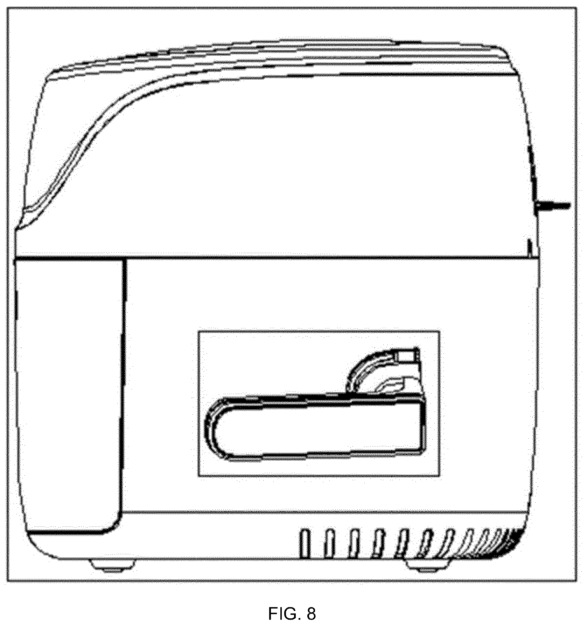

The embodiment further provides an air fryer comprising a machine body and a frying basket as described in the above embodiments, wherein the machine body is provided with a cooking cavity, and the frying basket is taken out and placed into the cooking cavity from a side wall of the machine body. For such drawer-type air fryer, as shown in FIG. 8, it is especially important to disassemble the handle section for separate storage when transporting. In this way, the packaging volume of the air fryer can be reduced, and there is no need for specially designed packaging materials, which is low-cost and has high practicability.

It should be noted that all directional indications (such as up, down, left, right, front, and back......) in the embodiments of the present disclosure are only used to explain the relative position relationship, movement, etc. between the parts in a particular attitude (as shown in the drawings); and if that particular attitude is changed, the directional indications are changed accordingly.

In addition, descriptions such as those involving "first" and "second" in the present disclosure are for descriptive purposes only and are not to be construed as indicating or implying their relative importance or implicitly specifying the number of technical features indicated. Thus, the features qualified with "first" and "second" may explicitly or implicitly include at least one such feature. In the description of the present disclosure, "plurality" means at least two, such as two, three, etc., unless otherwise expressly and specifically limited.

In the present disclosure, unless otherwise expressly specified and limited, the terms "connection" and "fix" should be understood in a broad sense. For example, "fix" can be a fixed connection, a detachable connection, or an integral part; it can be a mechanical connection or an electrical connection; it can be a direct connection or an indirect connection through an intermediate medium; and it can be an internal communication between two components or an interaction relationship between two components unless otherwise expressly specified and limited. Those of ordinary skill in the art can understand the specific meanings of the above terms in the present disclosure according to specific situations.

In addition, the technical solutions between the various embodiments of the present disclosure can be combined with each other, but only on the basis of what can be achieved by a person of ordinary skill in the art. When the combination of technical solutions contradicts each other or cannot be realized, it should be considered that such a combination of technical solutions does not exist and is not within the scope of protection claimed by the present disclosure.

## Claims

1. A frying basket with a detachable handle, comprising a frying basket body (1) and a handle section (2), **characterized in that** the frying basket body (1) and the handle section (2) are detachably connected to each other; an inner part of the frying basket body (1) is provided with a space to accommodate the handle section (2); the frying basket body (1) is thereon provided with a mounting port (9); one end of the handle section (2) is provided with a mounting base (21); and the mounting base (21) is fitted and embedded in the mounting port (9).

2. The frying basket with the detachable handle according to claim 1, wherein the mounting base (21) is provided with a snapping structure, which is configured to lock with the frying basket body (1) in a snapping manner when the mounting base (21) is fitted and embedded in the mounting port (9).

3. The frying basket with the detachable handle according to claim 2, wherein the snapping structure comprises a hook (6); one end of the hook (6) is hinged to the mounting base (21), and the other end is a movable end, wherein a resilient member (4) is arranged between the movable end and the mounting base (21); the mounting port (9) is therein provided with a snapping port (8); and the movable end of the hook (6) extends and is locked with the snapping port (8) in a snapping manner by the resilient member (4).

4. The frying basket with the detachable handle according to claim 3, wherein the mounting port (9) is provided therein with a snap plate (7) inclined toward the hook (6), and the snapping port (8) is formed between an inclined protruding end of the snap plate (7) and the frying basket body (1).

5. The frying basket with the detachable handle according to claim 3, wherein the mounting base (21) is provided with a through-hole (24), and a space between the through-hole (24) and the movable end of the hook (6) is provided for an auxiliary tool (10) to be inserted and moved.

6. The frying basket with the detachable handle according to claim 5, wherein the through-hole (24) is sealed by a detachable plug (3).

7. The frying basket with the detachable handle according to claim 1, wherein the mounting port (9) is provided on one of side edges of the frying basket body (1), and the mounting base (21) of the handle section (2) is slid into the mounting port (9) from top to bottom or from bottom to top.

8. The frying basket with the detachable handle according to claim 1, wherein sidewalls of both sides of the mounting port (9) are each provided with a limit groove, and both sides of the mounting base (21) are each provided with a limit protrusion (23) corresponding to the limit groove; or, the sidewalls of the both sides of the mounting port (9) are each provided with the limit protrusion (23), and the both sides of the mounting base (21) are each provided with the limit groove corresponding to the limit protrusion (23); and when the mounting base (21) is slid into the mounting port (9), the limit protrusion (23) is snapped into the limit groove.

9. The frying basket with the detachable handle according to claim 1, wherein the frying basket body (1) comprises a pot body (11) and a panel (12) arranged on one side of the pot body (11); and the mounting port (9) is arranged on the panel (12), and an inner part of the pot body (11) is a space to accommodate the handle section (2).

10. An air fryer, **characterized by** comprising a machine body and the frying basket according to any one of claims 1-9, wherein the machine body is provided with a cooking cavity, and the frying basket is taken out and placed into the cooking cavity from a side wall of the machine body.
